# FASCICULE DE BREVET EUROPEEN

(11) **EP 3 877 196 B1**
(45) Date de publication et mention de la délivrance du brevet: **21.08.2024**
(21) Numéro de dépôt: 19820830.8
(22) Date de dépôt: 07.11.2019
(51) Int. Cl.: B60C 1/00, C08F 297/04, C08G 81/02, C08K 3/36, C08L 87/00

(54) **COPOLYMÈRE DIÉNIQUE À BLOCS COMPRENANT UN BLOC POLYÉTHER ET COMPOSITION DE CAOUTCHOUC LE CONTENANT**
DIENBLOCKCOPOLYMER MIT EINEM POLYETHERBLOCK UND KAUTSCHUKZUSAMMENSETZUNG DAMIT
DIENE BLOCK COPOLYMER COMPRISING A POLYETHER BLOCK, AND RUBBER COMPOSITION CONTAINING SAME

(30) Priorité: 08.11.2018 FR 1860304
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: DIRE, Charlotte, 63040 Clermont-Ferrand Cedex 9 (FR); ROOS, Kevin, 63040 Clermont-Ferrand Cedex 9 (FR)
(74) Mandataire: M.F.P. Michelin
(86) Numéro de dépôt international: PCT/FR2019/052640
(87) Numéro de publication internationale: WO 2020/094987

(56) Documents cités:
- EP-A1- 1 127 909
- FR-A1- 2 918 064
- FR-A1- 2 918 065
- DATABASE WPI Week 201202, Derwent World Patents Index; AN 2011-Q64295, XP002794195

## Description

### Domaine technique

La présente invention est relative à un copolymère diénique à blocs comprenant au moins un bloc polyéther, ainsi que son procédé de préparation. La présente invention concerne également une composition de caoutchouc le contenant utilisable notamment pour la fabrication de pneus.

### Technique antérieur

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la constitution des pneus. Pour atteindre l'objectif de baisse d'hystérèse, de nombreuses solutions ont déjà été expérimentées.

En particulier, on peut citer la modification de la structure des polymères diéniques en introduisant des groupements polaires par exemple sous forme de fonctions ou sous forme de blocs polaires oligomères ou polymères au sein de la chaîne polymère ou pendants le long de la chaîne polymère,

En particulier, on peut citer l'utilisation de polymères diéniques à bloc polyéther tels que décrits dans EP 1 127 909 A1 dans le but d'obtenir une bonne interaction entre le polymère blocs et la charge inorganique de manière à diminuer l'hystérèse du mélange. Il a également été proposé dans WO 2009000750 A1, d'utiliser d'autres polymères diéniques blocs à au moins un bloc polyéther. Ces copolymères particuliers permettent d'optimiser l'aptitude à la mise en oeuvre à cru des compositions de caoutchouc les contenant et d'en réduire le niveau d'hystérèse à l'état réticulé.

Il est une préoccupation constante des concepteurs de matériaux destinés à la fabrication de pneumatiques d'améliorer toujours davantage les compromis de propriétés mécaniques et dynamiques des compositions de caoutchouc en vue d'améliorer les performances du pneu les contenant, sans pour autant pénaliser les propriétés de l'élastomère, voire même en les améliorant. Ainsi, par exemple, l'amélioration du compromis de propriétés ne doit pas se faire au détriment du fluage de l'élastomère qui entraîne des inconvénients importants lors du transport et du stockage des élastomères.

Le problème technique que se propose de résoudre l'invention est d'améliorer encore le compromis de propriété hystérèse et mise en oeuvre d'une composition de caoutchouc en vue d'une application en pneumatique, sans pénaliser les propriétés de l'élastomère contenu dans cette composition.

Ce but est atteint en ce que les Inventeurs ont maintenant mis en évidence que la modification d'un élastomère diénique par réaction des chaînes élastomères vivantes issues de la polymérisation avec un polyéther linéaire ou ramifié comprenant à chaque extrémité de la chaîne principale, un groupement trialcoxysilyle, permettait d'obtenir un copolymère diénique à blocs comprenant un bloc polaire conférant aux compositions de caoutchouc le contenant, à iso masse molaire de l'élastomère modifié, une amélioration remarquable et inattendue du compromis mise en oeuvre à cru / hystérèse.

### Exposé de l'invention

L'invention a donc pour objet un copolymère diénique à blocs caractérisé en ce qu'il comprend un bloc polyéther linéaire ou ramifié comprenant à chacune des deux extrémités du bloc, un point de branchement auquel est lié jusqu'à trois blocs élastomères diéniques,
a - le copolymère présentant une viscosité Mooney d'au moins 10 et d'au plus 100,
b- le copolymère étant composé
   d'au moins 30%, de préférence 35%, de macromolécules branchées comprenant le bloc polyéther auquel sont liés au moins trois blocs élastomères diéniques,
   d'au plus 70%, de préférence 65%, de macromolécules linéaires,
c - le bloc polyéther présentant masse molaire moyenne en nombre variant de 150 g/mol à 5000 g/mol, et
d - chacun des deux points de branchement étant constitué d'un atome de silicium.

Avantageusement, les blocs élastomères diéniques du copolymère diénique à blocs selon l'invention sont des copolymères de butadiène-styrène.

Le copolymère diénique à blocs selon l'invention présente avantageusement une viscosité Mooney d'au moins 30, de préférence d'au moins 40 et d'au plus 80, de préférence d'au plus 70.

Avantageusement, le bloc polyéther est un bloc polyoxyméthylène, poly(oxyde d'éthylène), poly(oxyde de propylène), ou polytétrahydrofurane, de préférence le bloc polyéther est un bloc poly(oxyde d'éthylène) ou poly(oxyde de propylène).

Avantageusement, au moins 70% molaire des branches élastomères par rapport au nombre de moles de branches élastomères, porte une fonction comprenant un atome d'azote, de préférence une fonction amine, cyclique ou acyclique à l'extrémité non liée à un atome de silicium.

Particulièrement, les macromolécules composant le copolymère diénique à blocs selon l'invention peuvent être représentées
- pour les macromolécules branchées par la formule générale I: 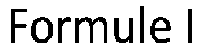 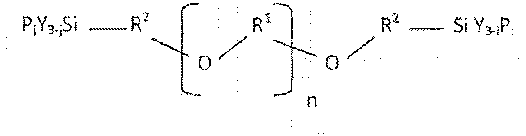 dans laquelle,
   - R¹ représente un groupement hydrocarboné divalent, de préférence un groupement aliphatique, linéaire ou ramifié, ayant 1 à 10 atomes de carbone, en particulier un groupement -CH(R')-CH(R"-, dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle,
   - les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
   - les Y représentent, de manière identique ou différente, un groupe de formule -OR⁴ dans laquelle les R⁴ représentent indépendamment les uns des autres, un atome d'hydrogène, un substituant alkyle en C₁ - C₁₈, cycloalkoxyle en C₅-C₁₈ ou aryle en C₆ - C₁₈, de préférence les R⁴ représentent un atome d'hydrogène ou un substituant alkyle C₁-C₄, de préférence méthyle ou éthyle,
   - i et j sont des nombres valant chacun indépendamment de l'autre 1, 2 ou 3, sous réserve que (i+j) varie de 3 à 6, et
      - P représente un bloc élastomère diénique ;
- et pour les macromolécules linéaires à blocs répondent à la formule générale II: 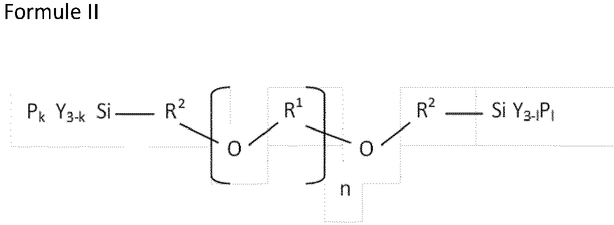 dans laquelle,
   - R¹ représente un groupement hydrocarboné divalent, de préférence un groupement aliphatique, linéaire ou ramifié, ayant 1 à 10 atomes de carbone, en particulier un groupement -CH(R')-CH(R")-, dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle,
   - les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
   - les Y représentent, de manière identique ou différente, un groupe de formule -OR⁴ dans laquelle les R⁴ représentent indépendamment les uns des autres, un atome d'hydrogène, un substituant alkyle en C₁ - C₁₈, cycloalkoxyle en C₅-C₁₈ ou aryle en C₆ - C₁₈, de préférence les R⁴ représentent un atome d'hydrogène ou un substituant alkyle C₁-C₄, de préférence méthyle ou éthyle,
   - k et l sont des nombres valant chacun indépendamment de l'autre 0 ou 1, sous réserve que (k+l) vaut 1 ou 2, et
   - P représente un bloc élastomère diénique.

Avantageusement, le copolymère comprend au moins 50% en poids de macromolécules branchées constituées d'un bloc polyéther auquel sont liées au moins trois branches élastomères diéniques.

Avantageusement, le copolymère comprend au plus 25% en poids de macromolécules branchées à quatre branches et plus constituées d'un bloc polyéther auquel sont liées quatre branches élastomères diéniques ou plus.

Avantageusement, le copolymère comprend au moins 20% en poids de macromolécules branchées à trois branches constituées d'un bloc polyéther auquel sont liées trois branches élastomères diéniques, de préférence au moins 35% en poids.

L'invention a aussi pour objet un procédé de synthèse d'un tel copolymère diénique à blocs comprenant la réaction du produit de la polymérisation anionique, en présence d'un initiateur de polymérisation, d'au moins un monomère diène, avec un polyéther fonctionnel, linéaire ou ramifié, de masse molaire moyenne en nombre variant de 150 à 5000 g/mol comprenant à chaque extrémité de la chaîne principale un groupement trifonctionnel choisi parmi les groupements trialcoxysilyles ou les groupements trihalogénosilyles, avec un rapport molaire du polyéther fonctionnel au métal de l'initiateur de polymérisation d'au moins 0,1, de préférence d'au moins 0,15, plus préférentiellement d'au moins 0,25, et d'au plus 0,45, préférentiellement d'au plus 0,40, voire d'au plus 0,35.

Avantageusement, le polyéther fonctionnel répond à la formule générale III: 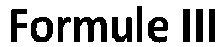 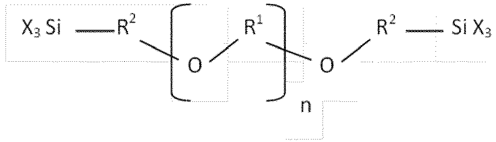 dans laquelle,
- R¹ représente un groupement hydrocarboné divalent, de préférence un groupement aliphatique, linéaire ou ramifié, , en C₁-C₁₀, en particulier un groupement -CH(R')-CH(R")- dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle,
- les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
- les X représentent, de manière identique ou différente, un atome d'halogène, de préférence un atome de chlore, ou un groupe de formule -OR³ dans laquelle les R³ représentent indépendamment les uns des autres, un substituant alkyle en C₁ - C₁₈, cycloalkoxyle en C₅-C₁₈ ou aryle en C₆ - C₁₈, de préférence les R³ représentent un substituant alkyle C₁-C₄, de préférence méthyle ou éthyle,
- n est un nombre supérieur à 1, de manière à ce que le bloc polyéther ait une masse molaire moyenne en nombre sensiblement de 150 à 5000 g/mol.

Le procédé selon l'invention peut comprendre une réaction d'hydrolyse à l'issue de la réaction du produit résultant de la polymérisation d'au moins un monomère diène, avec le polyéther fonctionnel.

L'invention a également pour objet un copolymère diénique à blocs directement obtenu par ce procédé de synthèse.

L'invention a aussi pour objet une composition de caoutchouc à base d'au moins un copolymère diénique à blocs conforme à l'invention.

L'invention a aussi pour objet un pneumatique qui comprend dans au moins un de ses éléments constitutifs, une composition de caoutchouc conforme à l'invention.

### Description détaillée

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). Dans la présente, lorsqu'on désigne un intervalle de valeurs par l'expression "de a à b", on désigne également l'intervalle représenté par l'expression "entre a et b".

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Dans un système comprenant un seul composé d'un certain type, celui-ci est majoritaire au sens de la présente invention.

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de ou destinés à réagir entre eux, au moins en partie, lors des différentes phases de fabrication de la composition destinée à la fabrication de pneu.

Dans la présente description, on entend par « polyéther fonctionnel » un polyéther difonctionnel. Le polyéther fonctionnel peut être linéaire ou ramifié et présente une chaîne principale comprenant à chacune des deux extrémités un atome de silicium, chacun substitué par trois fonctions alcoxyles ou par trois atomes halogène. Un polyéther linéaire comprend aux deux extrémités de la chaîne polymère un atome de silicium, chacun substitué par trois fonctions alcoxyles ou par trois atomes halogène. Un polyéther ramifié comprend une chaîne linéaire principale dont toutes ou une partie des unités de répétition sont ramifiées. Un polyéther ramifié comprend à chacune des deux extrémités de la chaîne principale un atome de silicium, chacun substitué par trois fonctions alcoxyles ou par trois atomes halogène. Les ramifications sont hydrocarbonées, de préférence aliphatique, et ne comprennent pas d'atome de silicium.

Dans la présente description, on entend par copolymère diénique à blocs un mélange de macromolécules issues de la réaction de chaînes élastomères vivantes réactives résultant de la polymérisation d'au moins un monomère diène avec un polyéther fonctionnel linéaire ou ramifié comprenant au moins six fonctions réactives trialcoxysilyles ou trihalogénosilyles.

L'homme du métier comprendra qu'une réaction avec un composé comprenant plus d'une fonction réactive vis-à-vis de chaînes élastomères vivantes, en l'occurrence de fonctions alcoxyles ou halogènes portées par les deux atomes de silicium, résulte en un mélange de macromolécules linéaires et de macromolécules branchées à au moins trois branches et au plus autant de branches que de fonctions réactives du polyéther fonctionnel, soit six branches. Selon les conditions opératoires, principalement le rapport molaire du nombre de fonctions réactives du polyéther fonctionnel aux chaînes vivantes, certaines macromolécules sont plus ou moins présentes, dans le mélange.

Dans la présente description, l'expression "unité monomère", qu'il soit diène ou autre, s'entend comme une unité du polymère issue du monomère en question.

Il convient de noter que dans le cadre de l'invention, les monomères utilisés peuvent être d'origine fossile ou biosourcée. Dans ce dernier cas, ils peuvent être partiellement ou totalement issus de la biomasse ou obtenus à partir de matières premières renouvelables issues de la biomasse.

L'invention a donc pour objet un copolymère diénique à blocs, caractérisé en ce qu'il comprend un bloc polyéther linéaire ou ramifié comprenant à chaque extrémité du bloc un point de branchement auquel est lié jusqu'à trois blocs élastomères diéniques,
a - le copolymère présentant une viscosité Mooney d'au moins 10, de préférence d'au moins 30 et d'au plus 100,
b - le copolymère étant composé
   d'au moins 30%, de préférence 35%, de macromolécules branchées comprenant un bloc polyéther auquel sont liés au moins trois blocs élastomères diéniques,
   d'au plus 70%, de préférence 65%, de macromolécules linéaires,
c - le bloc polyéther présentant masse molaire moyenne en nombre variant de 150 à 5000 g/mol, et
d - chacun des points de branchement étant constitué d'un atome de silicium.

Les blocs élastomère diénique sont constitués d'élastomères diéniques choisis préférentiellement dans le groupe constitué par les polybutadiènes (BR), les polyisoprènes (IR) de synthèse, les copolymères de butadiène, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique des blocs du copolymère selon l'invention peut être lui-même à blocs, statistique, séquencé, microséquencé, etc. Il peut avoir toute microstructure.

Selon un mode de réalisation de l'invention, l'extrémité des branches élastomères du copolymère à blocs, non liée à un atome de silicium peut porter une fonction comprenant un atome d'azote, de préférence une fonction amine, cyclique ou acyclique. De préférence les extrémités de branches élastomères du copolymère à blocs sont fonctionnalisées à au moins 70% molaire, par rapport au nombre de moles de branches élastomères, par une fonction amine, cyclique ou acyclique.

Selon une variante de l'invention, le copolymère diénique à bloc peut présenter une viscosité Mooney d'au moins 30, de préférence d'au moins 40, et d'au plus 80, de préférence d'au plus 70.

Selon une variante de l'invention, le bloc polyéther est un bloc constitué d'unités (O-R) , dans lesquelles R est un groupement-hydrocarboné divalent, de préférence un groupement aliphatique, linéaire ou ramifié, ayant 1 à 10 atomes de carbone, en particulier un groupement -CH(R')-CH(R")dans lequel R' et R" sont, indépendamment l'un de l'autre, un atome d'hydrogène ou un substituant alkyle en C₁-C₄, de préférence R est un groupement alcanediyle en C₁-C₄, plus préférentiellement un groupement éthanediyle ou propanediyle. On peut ainsi citer à titre de bloc polyéther convenant pour l'invention, le polyoxyméthylène, le poly(oxyde d'éthylène), le poly(oxyde de propylène), ou le polytétrahydrofurane, de préférence le bloc polyéther est un bloc poly(oxyde d'éthylène) ou poly(oxyde de propylène).

Selon une variante de l'invention, le bloc polyéther présente une masse molaire moyenne en nombre sensiblement de 150 à 5000g/mol et préférentiellement de 200 à 3000 g/mol. La masse molaire moyenne en nombre est calculée par la technique SEC (Size Exclusion Chromatography) qui permet de séparer les macromolécules en solution suivant leur taille à travers des colonnes remplies d'un gel poreux. La méthode est explicitée plus loin dans le texte.

Selon l'invention, les points de branchement du copolymère diénique à blocs sur lesquels sont liées les chaînes élastomères diéniques, sont des atomes de silicium. Les deux points de branchement se trouvent à chaque extrémité du bloc polyéther.

Ainsi, un point de branchement peut lier jusqu'à trois blocs élastomères diéniques au bloc polyéther.

Selon l'invention, les macromolécules linéaires sont constituées d'un mélange des macromolécules dont les deux points de branchement sont liés chacun à un bloc élastomère diénique (copolymère tribloc linéaire) et des macromolécules dont un seul point de branchement est lié à un bloc élastomère diénique (copolymère dibloc linéaire), ainsi que des chaînes élastomères non liées à un bloc polyéther (chaîne mortes n'ayant pas réagi avec le polyéther fonctionnel). Leur taux massique est d'au plus 70%, de préférence d'au plus 65% par rapport au poids total du copolymère à blocs.

Selon l'invention, les macromolécules branchées sont constituées d'un mélange des macromolécules dont les points de branchement sont liés à au moins trois blocs élastomères diéniques. Pour des raisons de faisabilité et de réalité technique, ces macromolécules présentent de préférence une répartition des blocs élastomères diéniques de part et d'autre du bloc polyéther. C'est-à-dire que tous les blocs élastomères ne sont pas liés au même point de branchement mais répartis sur les différents points de branchement. En d'autres termes, les macromolécules à trois branches comportent de préférence deux branches élastomères à une extrémité du bloc polyéther et une branche élastomère à l'autre extrémité, les macromolécules à quatre branches comportent de préférence deux branches élastomères à une extrémité du bloc polyéther et deux branches élastomères à l'autre extrémité ou trois branches élastomères à une extrémité du bloc polyéther et une branche élastomère à l'autre extrémité, et ainsi de suite. Leur taux massique est d'au moins 30%, de préférence d'au moins 35% par rapport au poids total du copolymère à blocs.

Selon un mode de réalisation de l'invention, les deux atomes de silicium sont substitués chacun par au plus trois branches élastomères et par au plus trois groupements hydroxyles ou alcoxy en C₁ - C₁₈, cycloalkoxy en C₅-C₁₈ ou oxyaryle en C₆ - C₁₈. De préférence, lorsque les atomes de silicium sont substitués par des groupements alcoxy ceux-ci sont des groupements alcoxy en C₁-C₄, de préférence méthoxy ou éthoxy.

Les groupements alcoxy substituant l'atome de silicium peuvent être, selon certaines variantes de l'invention, partiellement ou totalement hydrolysés en hydroxyle. Selon ces variantes, préférentiellement au moins 50% molaire des fonctions alcoxy portées par le copolymère diénique à blocs est hydrolysé en hydroxyle. Particulièrement, au moins 80% molaire des fonctions alcoxy portées par le copolymère diénique à blocs est hydrolysé en hydroxyle, voire 100%.

Les macromolécules à blocs composant le copolymère diénique à blocs selon l'invention peuvent être représentées par les formules I et II suivantes:
_ les macromolécules branchées répondant à la formule générale I: 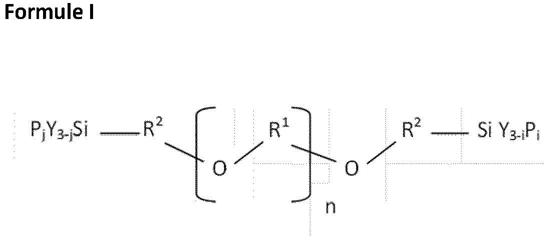 dans laquelle,
   - R¹ représente un groupement hydrocarboné divalent, de préférence un groupement aliphatique, linéaire ou ramifié, ayant 1 à 10 atomes de carbone, en particulier un groupement - CH(R') - CH(R") -, dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3- ;
   - les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
   - les Y représentent, de manière identique ou différente, un groupe de formule -OR⁴ dans laquelle les R⁴ représentent indépendamment les uns des autres, un atome d'hydrogène, un substituant alkyle en C₁ - C₁₈, cycloalkyle en C₅-C₁₈ ou aryle en C₆ - C₁₈, de préférence les R4 représentent un atome d'hydrogène ou un substituant alkyle C₁-C₄, de préférence méthyle ou éthyle,
   - i et j sont des nombres valant chacun indépendamment de l'autre 1, 2 ou 3, sous réserve que (i+j) varie de 3 à 6, et
      - P représente un bloc élastomère diénique ;
   - les macromolécules linéaires à blocs répondant à la formule générale II: 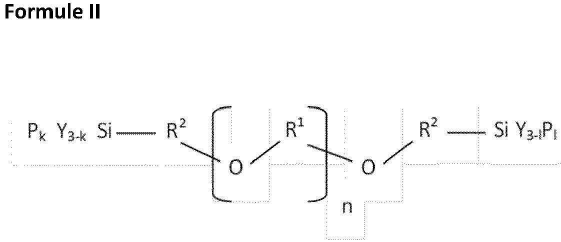 dans laquelle,
      - R¹ représente un groupement hydrocarboné divalent, de préférence un groupement aliphatique, linéaire ou ramifié, ayant 1 à 10 atomes de carbone, en particulier un groupement - CH(R') - CH(R") -, dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3- ;
      - les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
      - les Y représentent, de manière identique ou différente, un groupe de formule - OR⁴ dans laquelle les R⁴ représentent indépendamment les uns des autres, un atome d'hydrogène, un substituant alkyle en C₁-C₁₈, cycloalkyle en C₅-C₁₈ ou aryle en C₆ - C₁₈, de préférence les R⁴ représentent un atome d'hydrogène ou un substituant alkyle C₁-C₄, de préférence méthyle ou éthyle,
      - k et l sont des nombres valant chacun indépendamment de l'autre 0 ou 1, sous réserve que (k+l) vaut 1 ou 2, et
      - P représente un bloc élastomère diénique.

Selon des variantes de l'invention combinables avec les précédentes, P représente un bloc élastomère diénique portant en extrémité de chaîne un groupement comprenant un atome d'azote, plus particulièrement une fonction amine, cyclique ou acyclique.

Selon une variante de l'invention, le copolymère diénique à bloc de l'invention comprend au moins 50% en poids de macromolécules branchées par rapport au poids total du copolymère, de préférence au moins 80% en poids, les macromolécules branchées étant l'ensemble des macromolécules à au moins trois branches du copolymère, c'est-à-dire qu'elles sont constituées d'un bloc polyéther auquel sont liés au moins trois blocs élastomères diéniques.

Le lecteur comprendra que lorsque les macromolécules du copolymère diénique à blocs répondent aux formules I et II, selon cette variante, au moins 50% en poids des macromolécules par rapport au poids total du copolymère diénique à blocs, de préférence au moins 80% en poids, répond à la formule I.

Selon une variante de l'invention, combinable à la précédente, au plus 25% en poids du poids total du copolymère diénique à blocs peut être constitué de macromolécules comprenant un bloc polyéther auquel sont liés quatre blocs élastomères diéniques ou plus..

Le lecteur comprendra que lorsque les macromolécules du copolymère diénique à blocs répondent aux formules I et II, selon cette variante, au plus 25% en poids des macromolécules par rapport au poids total du copolymère diénique à blocs répond à la formule I pour laquelle i+j vaut 4 ou plus.

Le copolymère diénique à blocs selon une autre variante de réalisation préférée de l'invention, combinables à l'une ou l'autre des deux variantes précédentes ou à la combinaison des deux, comprend au moins 20% en poids, de préférence au moins 35%, plus préférentiellement au moins 40%, des macromolécules à trois branches, par rapport au poids total du copolymère, les macromolécules à trois branches étant constituées d'un bloc polyéther auquel sont liés trois blocs élastomères diéniques.

Le lecteur comprendra que lorsque les macromolécules du copolymère diénique à blocs répondent aux formules I et II, selon cette variante, au moins 20% en poids des macromolécules par rapport au poids total du copolymère à blocs, de préférence au moins 35%, plus préférentiellement au moins 40%, répond à la formule I pour laquelle i+j vaut 3.

Les différentes variantes et aspects préférentiels concernant la nature du copolymère diénique à blocs, la fonctionnalisation des branches élastomères, leur Mn, la fonction alcoxy, le nombre d'atomes de silicium, le groupement espaceur et le groupement comprenant au moins un atome d'azote, le taux de macromolécules branchées, le taux de macromolécules à trois branches ... sont combinables entre eux sous réserve de leur compatibilité.

Selon des variantes avantageuses de l'invention, le copolymère diénique à blocs comprenant des macromolécules comprenant au sein de leur structure un bloc polyéther linéaire ou ramifié comprenant à chaque extrémité de chaîne un point de branchement auquel sont liés jusqu'à trois blocs élastomères diéniques et jusqu'à trois groupements -OR⁴, R⁴ représentant, indépendamment les uns des autres, un substituant alkyle en C₁-C₄ ou un atome d'hydrogène, est tel qu'au moins une des caractéristiques suivantes est respectée, au moins deux, au moins trois, au moins quatre, au moins cinq, au moins six, au moins sept, et de préférence toutes :
(i) le bloc polyéther est constitué d'unités -(O-R)- , dans lesquelles R est un groupement alcanediyle en C₁-C₄, plus préférentiellement un groupement éthanediyle ou propanediyle 1,2- ou 1,3-,
(ii) le bloc polyéther présente une masse molaire moyenne en nombre sensiblement de 150 à 5000g/mol et préférentiellement de 200 à 3000 g/mol ;
(iii) tout ou partie des fonctions alcoxy substituant un ou des atomes de silicium est hydrolysé en hydroxyle ;
(iv) l'élastomère diénique est un copolymère butadiène-styrène,
(v) les extrémités de branches élastomères non liées à un atome de silicium est fonctionnalisée par rapport au nombre de moles de bout de chaîne, par une fonction amine ;
(vi) la Mn moyenne des branches élastomères est inférieure à 150 000 g/mol, de préférence de 40 000 à 100 000 g/mol ;
(vii) le copolymère diénique à blocs comprend au moins 50% en poids de macromolécules branchées à au moins trois branches ;
(viii) le copolymère diénique à blocs comprend au moins 20% en poids, de préférence au moins 35%, de macromolécules branchées à trois branches.

Selon ces variantes avantageuses de l'invention, l'élastomère diénique modifié peut comprendre, selon un aspect préférentiel, au plus 25% en poids de macromolécules branchées à quatre branches et plus.

L'invention a également pour objet un procédé de synthèse d'un copolymère diénique à blocs comprenant la réaction du produit de la polymérisation d'au moins un monomère diène, avec un polyéther fonctionnel, linéaire ou ramifié, de masse molaire moyenne en nombre variant de 150 à 5000 g/mol comprenant à chaque extrémité de chaîne un groupement trifonctionnel à base de silicium, réactif vis-à-vis de l'extrémité réactive de l'élastomère issu de l'étape de polymérisation.

L'étape de polymérisation selon l'invention peut être mise en oeuvre de manière connue en soi en continu ou en discontinu. On effectue généralement la polymérisation à des températures comprises entre 0°C et 110°C et de préférence de 40°C à 100°C, voire de 50°C à 90°C. La température peut être maintenue constante tout au long de cette étape ou peut être variable, selon les caractéristiques visées de l'élastomère synthétisé. Le procédé de polymérisation peut être mis en oeuvre en solution, en milieu plus ou moins concentré ou dilué. Le solvant de polymérisation est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène

Avantageusement, l'étape de polymérisation selon l'invention peut être mise en oeuvre par polymérisation anionique initiée par exemple au moyen d'un composé organique d'un métal alcalin ou alcalino-terreux. La polymérisation anionique d'au moins un monomère diène conjugué génère des chaînes élastomères possédant un site réactif en extrémité de chaîne. On parle alors communément d'élastomère vivant ou de chaîne vivante.

Dans le cadre de cette polymérisation anionique, l'initiateur de polymérisation peut être tout initiateur anionique, mono-ou polyfonctionnel connu. Toutefois un initiateur contenant un métal alcalin tel que le lithium est utilisé à titre préférentiel. Comme initiateurs organolithiens conviennent notamment ceux comportant au moins une liaison carbone-lithium ou au moins une liaison azote-lithium. Des composés représentatifs sont les organolithiens aliphatiques tels que l'éthyllithium, le n-butyllithium (n BuLi), l'isobutyllithium, les amidures de lithium obtenus à partir d'une amine secondaire cyclique, telle que la pyrrolidine et l'hexaméthylèneimine. De tels initiateurs de polymérisation anionique sont connus de l'homme du métier.

Ainsi, avantageusement, le procédé objet de l'invention comprend une étape de polymérisation anionique d'au moins un monomère diène conjugué en présence d'un initiateur de polymérisation anionique notamment ceux comportant une liaison carbone-lithium ou une liaison azote-lithium.

A titre de monomères diènes conjugués conviennent notamment le butadiène-1,3, le 2-méthyl-1,3-butadiène (isoprène), les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. Préférentiellement, le monomère diène conjugué est le butadiène-1,3 ou le 2-méthyl-1,3-butadiène.

Selon certaines variantes du procédé de l'invention, le monomère diène conjugué peut être homopolymérisé.

Selon d'autres variantes du procédé de l'invention, le monomère diène conjugué peut être copolymérisé avec un ou plusieurs monomères diènes conjugués et/ou avec un ou plusieurs monomères oléfines de préférence vinylaromatiques ayant de 8 à 20 atomes de carbone.

A titre de monomères vinylaromatiques conviennent notamment le styrène, l'ortho-, méta, para-méthylstyrène, l'alpha-méthylstyrène, le mélange commercial "vinyltoluène", le para-tertiobutylstyrène, etc.., préférentiellement le styrène.

Dans le cadre d'une copolymérisation d'un ou plusieurs monomères diènes conjugués avec un ou plusieurs monomères vinylaromatiques, les proportions de chaque monomère sont telles que les copolymères obtenus contiennent de 10 % à 99 % en poids d'unités diéniques, et de 1 à 80 % en poids d'unités issues de monomères vinylaromatiques. Préférentiellement, le monomère diène conjugué est le butadiène-1,3 et le monomère vinylaromatique est le styrène.

Afin d'affiner la microstructure des élastomères diéniques, on peut ajouter ou non un agent modifiant et/ou randomisant dans des quantités appropriées. Ceci est de l'ordre des connaissances générales de l'homme du métier.

Les variantes concernant l'étape de polymérisation sont combinables avec les variantes et aspects préférentiels ou alternatifs décrits ci-après.

La polymérisation d'au moins un monomère diène conjugué selon l'invention génère des chaînes élastomères possédant un site réactif en extrémité de chaîne. Selon une mise en oeuvre avantageuse, la polymérisation dans le cadre de l'invention est anionique et se fait en présence d'un initiateur de polymérisation. On parle alors communément d'élastomère vivant ou de chaîne vivante. Ces chaînes vivantes, ou élastomères vivants, réagissent ensuite sur les fonctions réactives du polyéther fonctionnel lors de l'étape suivante. Le polyéther fonctionnel comporte six groupements réactifs vis-à-vis du site réactif de l'élastomère vivant, en l'occurrence les groupements alcoxy ou les atomes halogène substituant les atomes de silicium, chaque atome de silicium étant substitué par trois de ces groupements ou atomes.

La quantité de polyéther fonctionnel destiné à réagir avec l'élastomère diénique vivant dépend essentiellement du type de de copolymère diénique à blocs voulu.

Ainsi, le rapport molaire du polyéther fonctionnel au métal de l'initiateur de polymérisation est avantageusement d'au moins 0,1, de préférence d'au moins 0,15, plus préférentiellement d'au moins 0,25, et d'au plus 0,45, préférentiellement d'au plus 0,40, voire d'au plus 0,35. Ainsi, selon une variante particulièrement avantageuse de l'étape de modification, le rapport molaire du polyéther fonctionnel au métal de l'initiateur de polymérisation a une valeur allant de de 0,25 à 0,40.

Les conditions d'adjonction et de réaction du polyéther fonctionnel sur l'élastomère sont classiques en matière de modification d'élastomère issu de polymérisation anionique et connues de l'homme du métier. Ces conditions ne comportent pas de limitations particulières.

Par exemple, cette réaction sur l'élastomère diénique vivant peut se dérouler à une température comprise entre -20°C et 100 °C, par addition du polyéther fonctionnel sur les chaînes élastomères vivantes ou inversement. Cette réaction peut bien sûr être réalisée avec un ou plusieurs polyéthers fonctionnels différents.

Le mélangeage de l'élastomère vivant avec le polyéther fonctionnel peut être réalisé par tout moyen approprié notamment à l'aide de tout mélangeur disposant d'une agitation de type statique et/ou tout mélangeur dynamique de type parfaitement agité connu par l'homme du métier. Ce dernier sait déterminer le temps de réaction entre le polymère diénique vivant et le polyéther fonctionnel qui peut varier de quelques minutes, par exemple 2 minutes, à plusieurs heures, par exemple 2 heures.

Le polyéther fonctionnel peut être linéaire ou ramifié. Selon une variante de l'invention, le polyéther fonctionnel est un polymère comprenant des unités -(O-R)- , dans lesquelles R est un groupement hydrocarboné divalent, de préférence un groupement aliphatique, linéaire ou ramifié, ayant 1 à 10 atomes de carbone, , en particulier un groupement - CH(R') - CH(R") - dans lequel R' et R" sont, indépendamment l'un de l'autre, un atome d'hydrogène ou un substituant alkyle en C₁-C₄, de préférence R est un groupement alcanediyle en C₁-C₄, plus préférentiellement un groupement éthanediyle ou propanediyle 1,2- ou 1,3-. On peut ainsi citer le polyoxyméthylène, le poly(oxyde d'éthylène), le poly(oxyde de propylène), ou le polytétrahydrofurane, de préférence le polyéther fonctionnel est issu d'un poly(oxyde d'éthylène) ou poly(oxyde de propylène).

Le polyéther fonctionnel selon l'invention comprend en outre à chacune des extrémités de chaînes, un groupement trialcoxysilyle ou trihalogénosilyle.

Lorsque les groupements en extrémité de chaînes sont des trialcoxysilyles, les groupements alcoxy sont acycliques en C₁-C₁₈ ou cycliques en C₅-C₁₈, ou encore aryloxy en C₆ - C₁₈, de préférence des groupements alcoxy acyclique en C₁-C₄, de préférence méthoxy ou éthoxy. Lorsque les groupements en extrémité de chaînes sont des trihalogénosilyles, l'atome d'halogène est de préférence le chlore.

Avantageusement, le polyéther fonctionnel présente une masse molaire moyenne en nombre de 150 à 5000g/mol, de préférence de 150 à 3000g/mol et plus préférentiellement de 200 à 3000 g/mol. La masse molaire moyenne en nombre est calculée par la technique SEC (Size Exclusion Chromatography) décrite plus loin.

Selon une variante de l'invention, le polyéther fonctionnel peut être représenté par la formule III suivante : 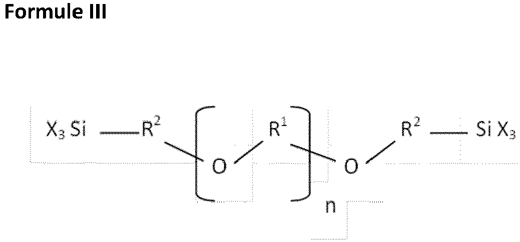 dans laquelle,
R¹ représente un groupement hydrocarboné divalent, de préférence un groupement aliphatique, linéaire ou ramifié, ayant 1 à 10 atomes de carbone, en particulier un groupement - CH(R') - CH(R") -, dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
   - les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
les X représentent, de manière identique ou différente, un atome d'halogène, de préférence Cl, ou un groupe de formule - OR³ dans laquelle les R³ représentent indépendamment les uns des autres, un substituant alkyle en C₁ -C₁₈, cycloalkoxyle en C₅-C₁₈ ou aryle en C₆ - C₁₈, de préférence les R³ représentent un substituant alkyle C₁-C₄, de préférence méthyle ou éthyle,
n est un nombre supérieur à 1, de manière à ce que le bloc polyéther ait une masse molaire moyenne en nombre sensiblement de 150 à 5000 g/mol de préférence de 150 à 3000g/mol et plus préférentiellement de 200 à 3000 g/mol.

Parmi les polyéthers fonctionnels répondant à la formule générale III, on peut citer par exemple le poly(oxy-1,2-ethanediyl)-α-[3-(triethoxysilyl)propyl]-ω-[3-(triethoxysilyl)propoxy], le poly(oxy-1,2-ethanediyl)-α-[3-(trimethoxysilyl)propyl]-ω-[3-(trimethoxysilyl)propoxy], le poly[oxy(methyl-1,2-ethanediyl)]-α-[3-(trichlorosilyl)propyl]-ω-[3-(trichlorosilyl)propoxy].

Le polyéther fonctionnel peut être soit trouvé dans le commerce, soit préparé selon des méthodes décrites dans la littérature consistant par exemple à réaliser une première réaction d'allylation d'un polyéthylène glycol en présence de bromure d'allyle et d'une base telle que l'hydroxyde de potassium, soit en solution aqueuse, soit dans un milieu biphasique soit encore dans un solvant organique comme le tétrahydrofurane puis une réaction d'hydrosilylation par exemple en utilisant un catalyseur au platine tel que le complexe platine(0)-1,3-divinyl-1,1,3,3-tetramethyldisiloxane ou l'acide hexachloroplatinique, en présence d'un trihalogénosilane tel que notamment le trichlorosilane ou encore un trialkoxysilane tel que notamment le triméthoxysilane ou le triéthoxysilane, en présence ou en l'absence de solvant.

Selon des variantes de l'invention, lorsque les atomes de silicium du polyéther fonctionnel porte des sites réactifs halogénés, le procédé de synthèse peut se poursuivre par une étape d'hydrolyse ou d'alcoolyse connue en soi permettant de générer des fonctions silanol Si-OH ou alkoxysilane Si-OR à partir de ces sites actifs halogénés n'ayant pas réagi avec l'élastomère vivant. Cette étape d'hydrolyse ou d'alcoolyse peut être réalisée en ajoutant la solution de polymère à une solution aqueuse ou à une solution contenant un alcool ou à l'inverse, en ajoutant l'eau ou l'alcool à la solution de polymère. Cette étape pourra être réalisée ou non en présence d'une base ou d'un tampon. A titre d'exemple on pourra utiliser une amine telle que la triéthylamine.

Selon d'autres variantes de l'invention, lorsque les atomes de silicium du polyéther fonctionnel porte des sites réactifs alcoxysilyles, le procédé de synthèse peut comprendre une étape d'hydrolyse des fonctions alcoxysilyles hydrolysables n'ayant pas réagi avec l'élastomère vivant, par adjonction d'un composé acide, basique ou neutre tel que décrit dans le document EP 2 266 819 A1. Les fonctions alcoxysilyles hydrolysables sont alors transformées en fonction silanol.

Le procédé de synthèse du copolymère diénique à blocs selon l'invention peut se poursuivre de manière connue en soi par les étapes de récupération du copolymère.

Selon des variantes de ce procédé, ces étapes comprennent une étape de stripping en vue de récupérer le copolymère diénique à blocs issu des étapes antérieures sous forme sèche. Cette étape de stripping peut avoir pour effet d'hydrolyser tout ou partie des fonctions alcoxysilyles hydrolysables résiduelles du copolymère diénique à blocs pour les transformer en fonctions silanol. Avantageusement, au moins 50 à 70% molaire des fonctions alcoxysilyles hydrolysables résiduelles peuvent ainsi être hydrolysées.

Le copolymère diénique à blocs selon l'invention confère aux compositions de caoutchouc le contenant, une amélioration remarquable et inattendue du compromis mise en oeuvre à cru / hystérèse, par rapport à un copolymère diénique à blocs comprenant un bloc polyéther décrit dans l'art antérieur, à iso masse molaire du copolymère. Les copolymères à blocs comprenant un bloc polyéther central décrit dans l'art antérieur présentent généralement un taux de polymères branchés très inférieur à 30%, comme par exemple le copolymère diénique à blocs comprenant un bloc polyéther central de l'exemple 1 de WO 2009000750 A1, qui présente moins de 30% de macromolécules branchées.

C'est pourquoi l'invention a encore pour objet une composition de caoutchouc particulièrement adaptée à la fabrication de pneus, à base d'au moins une charge renforçante et d'une matrice élastomère comprenant au moins un copolymère diénique à blocs selon l'invention.

La matrice élastomère peut comprendre jusqu'à 100 pce de copolymère diénique à blocs selon l'invention. Dans le cadre de la composition de caoutchouc renforcée, par "copolymère diénique à blocs selon l'invention", on entend par là non seulement un copolymère diénique à blocs selon l'invention, mais encore tout mélange d'au moins deux copolymères diéniques à blocs selon l'invention.

Selon des variantes de l'invention, la matrice élastomère peut également comprendre au moins un élastomère diénique différent du copolymère diénique à blocs selon l'invention. Ce ou ces élastomères diéniques peuvent être choisis parmi les élastomères diéniques conventionnellement utilisés dans les pneus, tels que le caoutchouc naturel ou un élastomère synthétique, qu'il soit modifié, fonctionnalisé, couplé ou étoilé, ou non. Le ou les élastomères diéniques synthétiques peuvent être choisis parmi les polybutadiènes (BR), les polyisoprènes de synthèse (IR), les copolymères de butadiène, les copolymères d'isoprène, et les mélanges de ces élastomères. Les copolymères de butadiène sont particulièrement des copolymères de butadiène-styrène (SBR). Ce ou ces élastomères diéniques complémentaires peuvent alors être présents de 1 à 70 parties en poids pour 100 parties de copolymère diénique à blocs selon l'invention.

Selon d'autres variantes, la matrice est uniquement constituée du copolymère diénique à blocs selon la présente invention.

A titre de charge renforçante, on peut utiliser tout type de charge connu pour ses capacités à renforcer une composition de caoutchouc utilisable pour la fabrication de pneus, par exemple du noir de carbone ou encore une charge renforçante autre que du noir de carbone, notamment une charge inorganique telle que la silice à laquelle peut être associé de manière connue un agent de couplage, ou encore un mélange de ces charges.

Selon une variante particulièrement intéressante de l'invention, la charge renforçante est majoritairement autre que du noir de carbone, c'est-à-dire qu'elle comprend majoritairement une ou plusieurs charges autres que du noir de carbone, notamment plus de 50% en poids du poids total de la charge est une charge inorganique renforçante telle que la silice, voire la charge renforçante est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

De manière préférentielle, le taux de charge renforçante (noir de carbone et/ou autre charge renforçante telle que la silice) est compris entre 10 et 200 pce, plus préférentiellement entre 30 et 200 pce, l'optimum étant de manière connue différent selon les applications particulières visées.

Comme noirs de carbone conviennent tous les noirs de carbone, utilisés individuellement ou sous forme de mélanges, notamment les noirs conventionnellement mis en oeuvre dans les pneumatiques ou leurs bandes de roulement. Ces noirs de carbone peuvent être utilisés à l'état isolé, tels que disponibles commercialement, ou sous toute autre forme, par exemple comme support de certains des additifs de caoutchouterie utilisés.

Comme charge inorganique renforçante, doit être entendu ici toute autre charge inorganique ou minérale, quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles à sa surface.

Comme charges inorganiques renforçantes conviennent notamment des charges minérales du type siliceux, préférentiellement la silice (SiO2). La silice utilisée peut être toute silice renforçante connue de l'homme du métier, notamment toute silice précipitée ou pyrogénée présentant une surface BET (selon la norme NF ISO 5794-1, annexe E de juin 2010) ainsi qu'une surface spécifique CTAB (selon la norme NF ISO 5794-1, annexe G de juin 2010) toutes deux inférieures à 450 m2/g, de préférence de 30 à 400 m2/g, notamment entre 60 et 300 m2/g. On citera également les charges minérales du type alumineux, en particulier de l'alumine (Al2O3), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. Comme charges renforçantes conviennent également des charges renforçantes d'une autre nature, notamment du noir de carbone, dès lors que ces charges renforçantes sont recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer des noirs de carbone partiellement ou intégralement recouverts de silice, ou des noirs de carbone modifiés par de la silice.

L'état physique sous lequel se présente la charge renforçante est indifférent, que ce soit sous forme de poudre, de microperles, de granulés, ou encore de billes. Bien entendu on entend également par charge inorganique renforçante des mélanges de différentes charges renforçantes, en particulier de silices hautement dispersibles telles que décrites ci-dessus.

Lorsque la silice est présente dans la composition à titre de charge renforçante, on peut utiliser comme agents de couplage des organosilanes, notamment des alcoxysilanes polysulfurés ou des mercaptosilanes, ou encore des polyorganosiloxanes au moins bifonctionnels. Des agents de liaison silice/élastomère, notamment, ont été décrits dans un grand nombre de documents, les plus connus étant des alcoxysilanes bifonctionnels tels que des alcoxysilanes polysulfurés.

Dans les compositions conformes à l'invention, lorsqu'un agent de couplage est utilisé, son taux est aisément ajusté par l'homme du métier selon le taux de la charge inorganique renforçante, notamment de type siliceux. Il est typiquement de l'ordre de 0,5% à 15% en poids par rapport au poids de charge inorganique renforçante, notamment de type siliceux.

Les compositions de caoutchouc conformes à l'invention peuvent également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalcoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

Les compositions de caoutchouc conformes à l'invention peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, les plastifiants éthers, les plastifiants esters (par exemple les trioléates de glycérol), des charges autres que celles précitées, par exemple des charges lamellaires, des résines plastifiantes hydrocarbonées présentant une haute Tg, de préférence supérieure à 30°C, telles que décrites par exemple dans les demandes WO 2005/087859, WO 2006/061064 et WO 2007/017060, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation., et les mélanges de tels composés.

L'invention a également pour objet un procédé de préparation d'une composition de caoutchouc telle que décrite précédemment.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 200°C, de préférence entre 130°C et 185°C, suivie d'une seconde phase de travail mécanique (phase dite "productive") jusqu'à une plus basse température, typiquement inférieure à 120°C, par exemple entre 40°C et 100°C, phase de finition au cours de laquelle est incorporé le système de réticulation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 2 et 10 min. Après refroidissement du mélange ainsi obtenu au cours de la première phase non-productive, on incorpore alors le système de vulcanisation à basse température et le cas échéant un promoteur d'adhésion, généralement dans un mélangeur externe tel qu'un mélangeur à cylindres; le tout est alors mélangé (phase productive) pendant quelques minutes, par exemple entre 5 et 15 min.

Selon des variantes de l'invention, le procédé de préparation de la composition de caoutchouc comprend les étapes de préparation du copolymère diénique à blocs selon l'invention telles que décrites plus haut selon ses différentes méthodes de synthèse.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneu.

En raison de l'amélioration du compromis hystérèse / mise en oeuvre qui caractérise une composition de caoutchouc renforcée selon l'invention, on notera qu'une telle composition peut constituer tout produit semi-fini du pneumatique et tout particulièrement la bande de roulement, diminuant ainsi sa résistance au roulement.

L'invention a également pour objet un produit semi-fini en caoutchouc comprenant une composition de caoutchouc selon l'invention, tout particulièrement la bande de roulement.

L'invention a également pour objet un pneu dont au moins un de ses éléments constitutifs est un produit semi-fini en caoutchouc comprenant une composition de caoutchouc selon l'invention, tout particulièrement la bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES

### I - MESURES ET TESTS UTILISES

### Détermination de la valeur de la Mn de la branche avant couplage ou étoilage par chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45µm avant injection.

L'appareillage utilisé est une chaîne chromatographique "WATERS alliance". Le solvant d'élution est le tétrahydrofurane, le débit de 1 mL.min-1, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

### Détermination des taux de macromolécules linéaires et macromolécules branchées par la technique de chromatographie d'exclusion stérique haute résolution (SEC haute résolution).

La technique de SEC haute résolution est utilisée pour déterminer les pourcentages massiques des différentes populations de chaînes présentes dans un échantillon de polymère. La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Une courbe d'étalonnage reliant le logarithme de la masse molaire (logM) au temps d'élution (te) est préalablement réalisée avec des étalons, et modélisée.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45 µm avant injection.

L'appareillage utilisé est une chaîne chromatographique "WATERS alliance 2695". Le solvant d'élution est le tétrahydrofurane, le débit de 0,2 ml.min-1, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 µL. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### Détermination de la viscosité Mooney

Pour les polymères et les compositions de caoutchouc, les viscosités Mooney ML(1+4)100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

### Détermination de la température de transition vitreuse des polymères

Les températures de transition vitreuse (Tg) des élastomères sont déterminées à l'aide d'un calorimètre différentiel ("differential scanning calorimeter") selon la norme ASTM D3418.

### Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse.

### Il - EXEMPLES DE PREPARATION DES COPOLYMERES BLOCS

### Préparation du polymère A : Copolymère diénique à blocs - témoin

Dans un réacteur de 90 litres, maintenu sous une pression d'azote d'environ 2 bars, contenant 44 kg de méthylcyclohexane, sont injectés 1.74 kg de styrène et 5.84 kg de butadiène ainsi que 1.07L d'une solution de tetrahydrofurane à 0.36 mol.L-1 dans le méthylcyclohexane. Après neutralisation des impuretés dans la solution à polymériser par addition de n-butyllithium, sont ajoutés 716 mL de n-butyllithium à 0.06 mol.L-1 dans le méthylcyclohexane. La polymérisation est conduite à 50°C.

Après 45 minutes, le taux de conversion des monomères atteint 68%. Ce taux est déterminé par pesée d'un extrait séché à 140 °C, sous la pression réduite de 200 mmHg. La valeur de la Mn branche avant couplage déterminée par SEC RI est de 120 000 g.mol-1.

1.19L d'une solution de poly(oxy-1,2-ethanediyl)-α-[3-(triethoxysilyl)propyl]-ω-[3-(triethoxysilyl)propoxy] (CAS 666829-33-0) à 0.018 mol.L-1 dans le toluène sont alors ajoutés (npoly(oxy-1,2-ethanediyl)-α-[3-(triethoxysilyl)propyl]-ω-[3-(triethoxysilyl)propoxy]) / n(n-butyllithium) = 0.5). La solution est agitée à une température de 50°C pendant 30minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 70.

La répartition des espèces 1 branche, 2 branches, 3 branches, 4 branches, 5 branches et 6 branches (1b/2b/3b/4b/5b/6b) déterminée par SEC haute résolution est la suivante : 16/72/6/4/3/0.

La température de transition vitreuse de ce copolymère est de - 63 °C.

### Préparation du polymère B : Copolymère diénique à blocs selon l'invention

Dans un réacteur de 90 litres, maintenu sous une pression d'azote d'environ 2 bars, contenant 44 kg de méthylcyclohexane, sont injectés 1.74 kg de styrène et 5.84 kg de butadiène ainsi que 1.02L d'une solution de tetrahydrofurane à 0.36 mol.L-1 dans le méthylcyclohexane. Après neutralisation des impuretés dans la solution à polymériser par addition de n-butyllithium, sont ajoutés 1.1mL de n-butyllithium à 0.06mol.L-1 dans le méthylcyclohexane. La polymérisation est conduite à 50°C.

Après 45minutes, le taux de conversion des monomères atteint 70%. Ce taux est déterminé par pesée d'un extrait séché à 140 °C, sous la pression réduite de 200 mmHg. La valeur de la Mn branche avant couplage déterminée par SEC RI est de 81 000 g.mol-1.

1.37L d'une solution de poly(oxy-1,2-ethanediyl)-α-[3-(triethoxysilyl)propyl]-ω-[3-(triethoxysilyl)propoxy] (CAS 666829-33-0) à 0.018 mol.L-1 dans le toluène sont alors ajoutés (npoly(oxy-1,2-ethanediyl)-α-[3-(triethoxysilyl)propyl]-ω-[3-(triethoxysilyl)propoxy]) / n(n-butyllithium) = 0.35). La solution est agitée à une température de 50°C pendant 15minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 44.

La répartition des espèces 1 branche, 2 branches, 3 branches, 4 branches, 5 branches et 6 branches (1b/2b/3b/4b/5b/6b) déterminée par SEC haute résolution est la suivante : 12/29/21/38/0/0.

La température de transition vitreuse de ce copolymère est de - 64 °C.

### Exemples de préparations des compositions de caoutchouc

Les élastomères A et B ont été utilisés pour la préparation de compositions de caoutchouc de type bande de roulement, comprenant chacune de la silice à titre de charge renforçante selon deux formulations différentes.

Chacune des compositions suivantes est réalisée, dans un premier temps, par un travail thermomécanique, puis, dans un second temps de finition, par un travail mécanique, selon des procédés usuels de préparation de mélange de caoutchouc.

On introduit successivement, dans un mélangeur interne de laboratoire de type "Banbury', dont la capacité est de 400 cm3, qui est rempli à 70% et dont la température initiale est d'environ 90°C, l'élastomère, les deux tiers de la silice, le noir, l'agent de couplage et l'huile, puis, environ une minute plus tard, le reste de la charge renforçante, la résine, l'antioxydant, l'acide stéarique et la cire anti-ozone, puis, environ deux minutes plus tard le monoxyde de zinc.

On conduit l'étape de travail thermomécanique pendant 4 à 5 minutes, jusqu'à une température maximale de tombée de 160°C environ.

Le premier temps précité de travail thermomécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Chacune des compositions présente la formulation suivante (exprimée en pce : parties pour cent parties d'élastomère) :

**Tableau 1**

| Ingrédients | Formulation 1 | Formulation 2 |
|---|---|---|
| Polymère | 100 | 100 |
| Silice | 110 | 70 |
| Noir de carbone | 3 | 3 |
| huile | 13 | 0 |
| Résine | 59 | 46 |
| Agent de couplage | 8.8 | 5.6 |
| Acide stéarique | 3 | 3 |
| Oxyde de Zinc | 1.5 | 1.5 |
| DPG | 2.3 | 1.5 |
| Soufre soluble | 1 | 1 |
| Accélérateur | 2.3 | 2.3 |
| Antioxydant | 3 | 3 |

| | | |
|---|---|---|
| Silice : "Zeosil 1165MP" de Rhodia, de type HDS. Noir de carbone : grade ASTM N234 de la société Cabot Corporation Huile : Huile de tournesol à 85 % en poids d'acide oléique, « Lubrirob Tod 1880 » de la société Novance Résine : résine DCPD aromatique, Escorez 5600 ou PR383, de la société ExxonMobil Agent de couplage : Silane TESPT Si69, de Degussa DPG : Diphénylguanidine (« Perkacit » DPG de la société Flexsys) Accélérateur : CBS : N-cylohexyl-2-benzothiazol-sulfénamide (« Santocure CBS » de la société Flexsys) Antioxydant : N-(1,3-diméthylbutyl)-N'-phényl-p-phénylènediamine, de la société Flexsys | | |

### Résultats:

Les résultats présentés dans les tableaux ci-dessous montrent :
Que l'élastomère selon l'invention améliore le compromis hystérèse/Mooney composition par rapport à l'élastomère de référence, que ce soit dans l'une ou l'autre des deux formulations.

Que l'élastomère selon l'invention améliore particulièrement le compromis lorsqu'il est utilisé dans une composition contenant un fort taux de silice (Formulation 1).

**Tableau 2**

| polymère | | formulation 1 | | |
|---|---|---|---|---|
| | | tan delta max 23°C | Mooney composition | indice de performance |
| A | témoin | 100 | 100 | 1.0 |
| B | invention | 102 | 65 | 1.5 |

**Tableau 3**

| polymère | | formulation 2 | | |
|---|---|---|---|---|
| | | tan delta max 23°C | Mooney composition | indice de performance |
| A | témoin | 100 | 100 | 1.0 |
| B | invention | 112 | 64 | 1.4 |

Dans le tableau ci-dessus, les valeurs de tan delta ou de Mooney sont exprimées en base 100 par rapport au témoin.

L'indice de performance est calculé comme : 10000 / (valeur de tan delta * valeur de Mooney composition). Plus le tan delta est faible, plus le Mooney composition est faible, meilleur est le compromis de performance résistance au roulement / mise en oeuvre.

## Revendications

1. Copolymère diénique à blocs comprenant un bloc polyéther, linéaire ou ramifié, comprenant à chaque extrémité du bloc un point de branchement auquel sont liées jusqu'à trois branches élastomères diéniques, **caractérisé en ce que**
a - le copolymère présente une viscosité Mooney d'au moins 30 et d'au plus 100, la viscosité Mooney étant mesurée à 100 °C selon la norme ASTM D-1646,
b- le copolymère comprend
au moins 30% en poids, de préférence 35%, de macromolécules branchées comprenant un bloc polyéther auquel sont liés au moins trois blocs élastomères diéniques,
au plus 70% en poids, de préférence 65%, de macromolécules linéaires,
c - le bloc polyéther présente une masse molaire moyenne en nombre variant de 150 à 5000 g/mol, la masse molaire moyenne en nombre étant déterminée par SEC haute résolution, et
d - chacun des deux points de branchement est constitué d'un atome de silicium.

2. Copolymère diénique à blocs selon la revendication 1, **caractérisé en ce que** les deux atomes de silicium sont substitués chacun par au plus trois branches élastomères et par au plus trois groupements hydroxyles ou alcoxy en C₁ - C₁₈, cycloalkoxy en C₅-C₁₈ ou oxyaryle en C₆ - C₁₈.

3. Copolymère diénique à blocs selon la revendication 1 ou 2, **caractérisé en ce que** le copolymère présente une viscosité Mooney d'au moins 40 et d'au plus 80, de préférence d'au plus 70, la viscosité Mooney étant mesurée à 100 °C selon la norme ASTM D-1646.

4. Copolymère diénique à blocs selon l'une quelconque des revendications 1 à 3, **caractérisé en ce que** le bloc polyéther est un bloc polyoxyméthylène, poly(oxyde d'éthylène) poly(oxyde de propylène), ou polytétrahydrofurane, de préférence le bloc polyéther est un bloc poly(oxyde d'éthylène) ou poly(oxyde de propylène).

5. Copolymère diénique à blocs selon l'une quelconque des revendications 1 à 4, **caractérisé en ce que** l'extrémité des branches élastomères non liée à un atome de silicium porte une fonction comprenant un atome d'azote, de préférence une fonction amine, cyclique ou acyclique à l'extrémité non liée à un atome de silicium.

6. Copolymère diénique à blocs selon l'une quelconque des revendications 1 à 5, **caractérisé en ce que**
_ les macromolécules branchées répondent à la formule générale I: 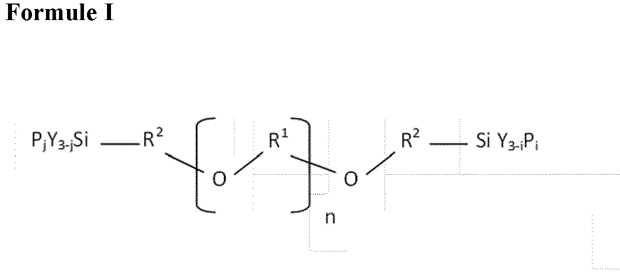 dans laquelle,
- R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle 1,2- ou 1,3-,
- les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10 ;
- les Y représentent, de manière identique ou différente, un groupe de formule - OR⁴ dans laquelle les R⁴ représentent indépendamment les uns des autres, un atome d'hydrogène, un substituant alkyle en C₁ - C₁₈, cycloalkoxyle en C₅-C₁₈ ou aryle en C₆ - C₁₈, de préférence les R⁴ représentent un atome d'hydrogène ou un substituant alkyle C₁-C₄, de préférence méthyle ou éthyle,
- i et j sont des nombres valant chacun indépendamment de l'autre 1, 2 ou 3, sous réserve que (i+j) varie de 3 à 6, et
- P représente un bloc élastomère diénique ;
_ et les macromolécules linéaires à blocs répondent à la formule générale II: 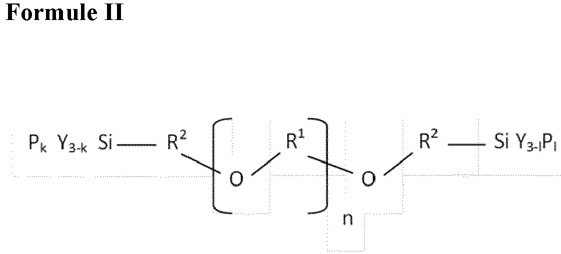 dans laquelle,
- R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle1,2- ou 1,3-,
- les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
- les Y représentent, de manière identique ou différente, un groupe de formule - OR⁴ dans laquelle les R⁴ représentent indépendamment les uns des autres, un atome d'hydrogène, un substituant alkyle en C₁ - C₁₈, cycloalkoxyle en C₅-C₁₈ ou aryle en C₆ - C₁₈, de préférence les R⁴ représentent un atome d'hydrogène ou un substituant alkyle C₁-C₄, de préférence méthyle ou éthyle,
- k et 1 sont des nombres valant chacun indépendamment de l'autre 0 ou 1, sous réserve que (k+l) vaut 1 ou 2, et
- P représente un bloc élastomère diénique.

7. Copolymère diénique à blocs selon l'une quelconque des revendications 1 à 6, **caractérisé en ce que** le copolymère comprend au moins 50% en poids de macromolécules branchées constitué d'un bloc polyéther auquel sont liés au moins trois blocs élastomères diéniques.

8. Copolymère diénique à blocs selon l'une quelconque des revendications 1 à 7, **caractérisé en ce que** le copolymère comprend au moins 20% en poids, de préférence au moins 35%, de macromolécules branchées constitué d'un bloc polyéther auquel sont liés trois blocs élastomères diéniques.

9. Copolymère diénique à blocs selon l'une quelconque des revendications 1 à 8, **caractérisé en ce que** le copolymère comprend au plus 25% de macromolécules branchées constitué d'un bloc polyéther auquel sont liés quatre blocs élastomères diéniques ou plus.

10. Copolymère diénique à blocs selon l'une quelconque des revendications 1 à 9, **caractérisé en ce qu'**à chaque point de branchement sont liés jusqu'à trois blocs élastomères diéniques et jusqu'à trois groupements -OR⁴, R⁴ représentant, indépendamment les uns des autres, un substituant alkyle en C₁-C₄ ou un atome d'hydrogène, et **en ce qu'**au moins une des caractéristiques suivantes est respectée, au moins deux, au moins trois, au moins quatre, au moins cinq, au moins six, au moins sept, et de préférence toutes :
(i) le bloc polyéther est linéaire constitué d'unités -(O-R)- , dans lesquelles R est un groupement alcanediyle en C₁-C₄, plus préférentiellement un groupement éthanediyle ou propanediyle,
(ii) le bloc polyéther présente une masse molaire moyenne en nombre sensiblement de 150 à 5000g/mol et préférentiellement de 200 à 3000 g/mol ;
(iii) toutes ou une partie, de préférence au moins 50% molaire, des fonctions alcoxy substituant un ou des atomes de silicium est hydrolysé en hydroxyle ;
(iv) l'élastomère diénique est un copolymère butadiène-styrène ;
(v) toutes ou une partie, de préférence au moins 70% molaire, des extrémités de branches élastomères non liées à un atome de silicium est fonctionnalisée par rapport au nombre de moles de bout de chaîne, par une fonction amine ;
(vi) la Mn moyenne des branches élastomères est inférieure à 150 000 g/mol, de préférence de 40 000 à 100 000 g/mol,
(vii) le copolymère comprend au moins 50% en poids de macromolécules branchées à au moins trois branches ;
(viii) le copolymère comprend au moins 20% en poids de macromolécules branchées à trois branches, de préférence au moins 35%%,
les masses molaires moyennes en nombre étant déterminées par SEC haute résolution.

11. Procédé de synthèse d'un copolymère diénique à blocs selon l'une quelconque des revendications 1 à 10, **caractérisé en ce qu'**il comprend la réaction du produit de la polymérisation anionique, en présence d'un initiateur de polymérisation, d'au moins un monomère diène, avec un polyéther, linéaire ou ramifié, fonctionnalisé de masse molaire moyenne en nombre variant de 150 à 5000 g/mol, la masse molaire moyenne en nombre étant déterminée par SEC haute résolution, comprenant à chaque extrémité de la chaîne principale un groupement trifonctionnel choisi parmi les groupements trialcoxysilyles ou les groupements trihalogénosilyles, avec un rapport molaire du polyéther fonctionnel au métal de l'initiateur de polymérisation d'au moins 0,1, de préférence d'au moins 0,15, plus préférentiellement d'au moins 0,25, et d'au plus 0,45, préférentiellement d'au plus 0,40, voire d'au plus 0,35.

12. Procédé selon la revendication 11, **caractérisé en ce que** le polyéther fonctionnalisé répond à la formule générale III: 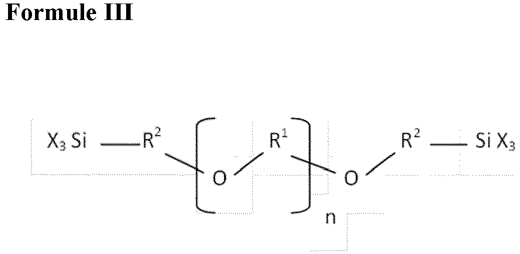 dans laquelle,
- R¹ représente un groupement hydrocarboné divalent, linéaire ou ramifié, en C₁-C₁₀, en particulier un groupement - CH(R') - CH(R") - dans lequel R' et R" sont, indépendamment l'un de l'autre, un atome d'hydrogène ou un substituant alkyle en C₁-C₄, de préférence R¹ est un groupement alcanediyle en C₁-C₄, plus préférentiellement un groupement éthanediyle ou propanediyle,
- les R² représentent, indépendamment l'un de l'autre, un groupement hydrocarboné divalent, de préférence un groupement aliphatique, linéaire ou ramifié ou cyclique, saturé ou insaturé, ayant 1 à 50 atomes de carbone, de préférence un groupement aliphatique linéaire, de préférence saturé, ayant préférentiellement 1 à 15 atomes de carbone, de préférence 2 à 10,
- les X représentent un atome d'halogène, de préférence un atome de chlore, ou un groupe de formule - OR³ dans laquelle les R³ représentent indépendamment les uns des autres, un substituant alkyle en C₁-C₁₈, cycloalkoxyle en C₅-C₁₈ ou aryle en C₆-C₁₈, de préférence les R³ représentent un substituant alkyle C₁-C₄, de préférence méthyle ou éthyle,
- n est un nombre supérieur à 1, de manière à ce que le bloc polyéther ait une masse molaire moyenne en nombre sensiblement de 150 à 5000 g/mol, la masse molaire moyenne en nombre étant déterminée par SEC haute résolution,.

13. Procédé selon la revendication 11 ou 12, **caractérisé en ce qu'**il comprend une réaction d'hydrolyse à l'issue de la réaction du produit résultant de la polymérisation d'au moins un monomère diène avec un polyéther fonctionnel.

14. Composition de caoutchouc à base d'au moins une charge renforçante et un copolymère diénique à blocs tel que défini dans les revendications 1 à 10 ou synthétisé selon le procédé décrit dans les revendications 11 à 13.

15. Pneu **caractérisé en ce qu'**il comprend dans au moins un de ses éléments constitutifs une composition de caoutchouc selon la revendication 14.

## Patentansprüche

1. Dienblockcopolymer, das einen linearen oder verzweigten Polyetherblock umfasst, der an jedem Ende des Blocks eine Verzweigungsstelle umfasst, an der bis zu drei Dienelastomer-Äste gebunden sind, **dadurch gekennzeichnet, dass**
a - das Copolymer eine Mooney-Viskosität von mindestens 30 und höchstens 100 aufweist, wobei die Mooney-Viskosität bei 100 °C gemäß der Norm ASTM D-1646 gemessen wird,
b - das Copolymer
mindestens 30 Gew.-%, vorzugsweise 35 Gew.-%, verzweigte Makromoleküle, die einen Polyetherblock umfassen, an den mindestens drei Dienelastomerblöcke gebunden sind,
höchstens 70 Gew.-%, vorzugsweise 65 Gew.-%, lineare Makromoleküle umfasst,
c - der Polyetherblock ein Zahlenmittel der Molmasse von 150 bis 5000 g/mol aufweist, wobei das Zahlenmittel der Molmasse mittels hochauflösender SEC bestimmt wird, und
d - jede der zwei Verzweigungsstellen aus einem Siliciumatom besteht.

2. Dienblockcopolymer nach Anspruch 1, **dadurch gekennzeichnet, dass** die zwei Siliciumatome jeweils durch höchstens drei Elastomer-Äste und durch höchstens drei Hydroxyl- oder C₁-C₁₈-Alkoxy-, C₅-C₁₈-Cycloalkoxy- oder C₆-C₁₈-Oxyarylgruppen substituiert sind.

3. Dienblockcopolymer nach Anspruch 1 oder 2, **dadurch gekennzeichnet, dass** das Copolymer eine Mooney-Viskosität von mindestens 40 und höchstens 80, vorzugsweise höchstens 70, aufweist, wobei die Mooney-Viskosität bei 100 °C gemäß der Norm ASTM D-1646 gemessen wird.

4. Dienblockcopolymer nach einem der Ansprüche 1 bis 3, **dadurch gekennzeichnet, dass** der Polyetherblock ein Polyoxymethylen-, Poly(ethylenoxid)-, Poly(propylenoxid)- oder Polytetrahydrofuranblock ist, der Polyetherblock vorzugsweise ein Poly(ethylenoxid)- oder Poly(propylenoxid)-Block ist.

5. Dienblockcopolymer nach einem der Ansprüche 1 bis 4, **dadurch gekennzeichnet, dass** das Ende der Elastomer-Äste, das nicht an ein Siliciumatom gebunden ist, eine ein Stickstoffatom umfassende Funktion, vorzugsweise eine cyclische oder acyclische Aminfunktion, an dem Ende trägt, das nicht an ein Siliciumatom gebunden ist.

6. Dienblockcopolymer nach einem der Ansprüche 1 bis 5, **dadurch gekennzeichnet, dass**
_ die verzweigten Makromoleküle der allgemeinen Formel I: 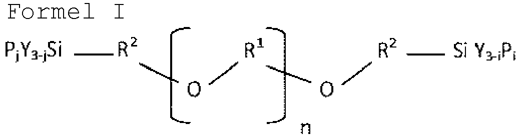 entsprechen, wobei
- R¹ eine lineare oder verzweigte zweiwertige C₁-C₁₀-Kohlenwasserstoffgruppe, insbesondere eine -CH(R')-CH(R")--Gruppe, darstellt, wobei R' und R" unabhängig voneinander ein Wasserstoffatom oder ein C₁-C₄-Alkylsubstituent, sind, R¹ vorzugsweise eine C₁-C₄-Alkandiyl-Gruppe, stärker bevorzugt eine 1,2- oder 1,3-Ethandiyl- oder -Propandiylgruppe, ist,
- die R² unabhängig voneinander eine zweiwertige Kohlenwasserstoffgruppe, vorzugsweise eine aliphatische, lineare oder verzweigte oder cyclische, gesättigte oder ungesättigte Gruppe mit 1 bis 50 Kohlenstoffatomen, vorzugsweise eine lineare aliphatische, vorzugsweise gesättigte, Gruppe mit vorzugsweise 1 bis 15, vorzugsweise 2 bis 10, Kohlenstoffatomen darstellen;
- die Y, die identisch oder verschieden sein können, eine Gruppe der Formel -OR⁴ darstellen, wobei die R⁴ unabhängig voneinander ein Wasserstoffatom, einen C₁-C₁₈-Alkyl-, C₅-C₁₈-Cycloalkoxyl- oder C₆-C₁₈-Arylsubstituenten darstellen, wobei die R⁴ vorzugsweise ein Wasserstoffatom oder einen C₁-C₄-Alkylsubstituenten, vorzugsweise Methyl oder Ethyl, darstellen,
- i und j Zahlen sind, die jeweils unabhängig voneinander 1, 2 oder 3 betragen, mit der Maßgabe, dass (i+j) von 3 bis 6 reicht, und
- P einen Dienelastomerblock darstellt;
_ und die linearen Block-Makromoleküle der allgemeinen Formel II: 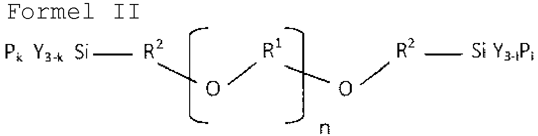 entsprechen, wobei
- R¹ eine lineare oder verzweigte zweiwertige C₁-C₁₀-Kohlenwasserstoffgruppe, insbesondere eine -CH(R')-CH(R")--Gruppe, darstellt, wobei R' und R" unabhängig voneinander ein Wasserstoffatom oder ein C₁-C₄-Alkylsubstituent, sind, R¹ vorzugsweise eine C₁-C₄-Alkandiyl-Gruppe, stärker bevorzugt eine 1,2- oder 1,3-Ethandiyl- oder -Propandiylgruppe, ist,
- die R² unabhängig voneinander eine zweiwertige Kohlenwasserstoffgruppe, vorzugsweise eine aliphatische, lineare oder verzweigte oder cyclische, gesättigte oder ungesättigte Gruppe mit 1 bis 50 Kohlenstoffatomen, vorzugsweise eine lineare aliphatische, vorzugsweise gesättigte, Gruppe mit vorzugsweise 1 bis 15, vorzugsweise 2 bis 10, Kohlenstoffatomen darstellen,
- die Y, die identisch oder verschieden sein können, eine Gruppe der Formel -OR⁴ darstellen, wobei die R⁴ unabhängig voneinander ein Wasserstoffatom, einen C₁-C₁₈-Alkyl-, C₅-C₁₈-Cycloalkoxyl- oder C₆-C₁₈-Arylsubstituenten darstellen, wobei die R⁴ vorzugsweise ein Wasserstoffatom oder einen C₁-C₄-Alkylsubstituenten, vorzugsweise Methyl oder Ethyl, darstellen,
- k und 1 Zahlen sind, die jeweils unabhängig voneinander 0 oder 1 betragen, mit der Maßgabe, dass (k+l) von 1 bis 2 reicht, und
- P einen Dienelastomerblock darstellt.

7. Dienblockcopolymer nach einem der Ansprüche 1 bis 6, **dadurch gekennzeichnet, dass** das Copolymer mindestens 50 Gew.-% verzweigte Makromoleküle umfasst, die aus einem Polyetherblock bestehen, an dem mindestens drei Dienelastomerblöcke gebunden sind.

8. Dienblockcopolymer nach einem der Ansprüche 1 bis 7, **dadurch gekennzeichnet, dass** das Copolymer mindestens 20 Gew.-%, vorzugsweise mindestens 35 Gew.-%, verzweigte Makromoleküle umfasst, die aus einem Polyetherblock bestehen, an dem mindestens drei Dienelastomerblöcke gebunden sind.

9. Dienblockcopolymer nach einem der Ansprüche 1 bis 8, **dadurch gekennzeichnet, dass** das Copolymer höchstens 25 Gew.-% verzweigte Makromoleküle umfasst, die aus einem Polyetherblock bestehen, an dem vier oder mehr Dienelastomerblöcke gebunden sind.

10. Dienblockcopolymer nach einem der Ansprüche 1 bis 9, **dadurch gekennzeichnet, dass** an jeder Verzweigungsstelle bis zu drei Dienelastomerblöcke und bis zu drei -OR⁴-Gruppen gebunden sind, wobei R⁴ unabhängig voneinander einen C₁-C₄-Alkylsubstituenten oder ein Wasserstoffatom darstellt, und dadurch, dass mindestens eines, mindestens zwei, mindestens drei, mindestens vier, mindestens fünf, mindestens sechs, mindestens sieben und vorzugsweise alle der folgenden Merkmale eingehalten wird bzw. werden:
(i) der Polyetherblock ist linear, wobei er aus -(O-R)- -Einheiten besteht, bei denen R eine C₁-C₄-Alkyldiylgruppe, stärker bevorzugt eine Ethandiyl- oder Propandiylgruppe, ist,
(ii) der Polyetherblock weist ein Zahlenmittel der Molmasse im Wesentlichen von 150 bis 5000 g/mol und vorzugsweise von 200 bis 3000 g/mol auf;
(iii) alle oder ein Teil, vorzugsweise mindestens 50 Mol-%, der Alkoxyfunktionen, die ein oder die Siliciumatome substituieren, sind zu Hydroxyl hydrolysiert;
(iv) das Dienelastomer ist ein Butadien-StyrolCopolymer;
(v) alle oder ein Teil, vorzugsweise mindestens 70 Mol- %, der Enden der Elastomer-Äste, die nicht an ein Siliciumatom gebunden sind, sind in Bezug auf die Molzahl des Kettenendes durch eine Aminfunktion funktionalisiert;
(vi) das mittlere Mn der Elastomer-Äste ist kleiner als 150 000 g/mol, beträgt vorzugsweise 40 000 bis 100 000 g/mol,
(vii) das Copolymer umfasst mindestens 50 Gew.-% verzweigte Makromoleküle mit mindestens drei Ästen;
(vii) das Copolymer umfasst mindestens 20 Gew.-% verzweigte Makromoleküle mit drei Ästen, vorzugsweise mindestens 35 Gew.-%,
wobei die Zahlenmittel der Molmasse mittels hochauflösender SEC bestimmt werden.

11. Verfahren zur Synthese eines Dienblockcopolymers nach einem der Ansprüche 1 bis 10, **dadurch gekennzeichnet, dass** es die Reaktion des Produkts der anionischen Polymerisation in Gegenwart eines Polymerisationsinitiators, mindestens eines Dienmonomers, mit einem funktionalisierten linearen oder verzweigten Polyether mit einem Zahlenmittel der Molmasse von 150 bis 5000 g/mol umfasst, wobei das Zahlenmittel der Molmasse mittels hochauflösender SEC bestimmt wird, der an jedem Ende seiner Hauptkette eine trifunktionelle Gruppe umfasst, die aus Trialkoxysilyl-Gruppen oder Trihalogensilyl-Gruppen ausgewählt ist, wobei das Stoffmengenverhältnis zwischen dem funktionellen Polyether und dem Metall des Polymerisationsinitiators mindestens 0,1, vorzugsweise mindestens 0,15, stärker bevorzugt mindestens 0,25 und höchstens 0,45, vorzugsweise höchstens 0,40 oder sogar höchstens 0,35, beträgt.

12. Verfahren nach Anspruch 11, **dadurch gekennzeichnet, dass** der funktionalisierte Polyether der allgemeinen Formel III: 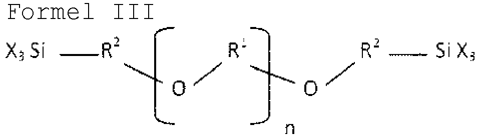 entspricht, wobei
- R¹ eine lineare oder verzweigte zweiwertige C₁-C₁₀-Kohlenwasserstoffgruppe, insbesondere eine -CH(R')-CH(R")--Gruppe, darstellt, wobei R' und R" unabhängig voneinander ein Wasserstoffatom oder ein C₁-C₄-Alkylsubstituent, sind, R¹ vorzugsweise eine C₁-C₄-Alkandiyl-Gruppe, stärker bevorzugt eine Ethandiyl- oder Propandiylgruppe, ist,
- die R² unabhängig voneinander eine zweiwertige Kohlenwasserstoffgruppe, vorzugsweise eine aliphatische, lineare oder verzweigte oder cyclische, gesättigte oder ungesättigte Gruppe mit 1 bis 50 Kohlenstoffatomen, vorzugsweise eine lineare aliphatische, vorzugsweise gesättigte Gruppe mit vorzugsweise 1 bis 15, vorzugsweise 2 bis 10, Kohlenstoffatomen darstellen,
- die X ein Halogenatom, vorzugsweise ein Chloratom, oder eine Gruppe der Formel -OR³ darstellen, wobei die R³ unabhängig voneinander einen C₁-C₁₈-Alkyl-, C₅-C₁₈-Cycloalkoxyl- oder C₆-C₁₈-Arylsubstituenten darstellen, wobei die R³ vorzugsweise einen C₁-C₄-Alkylsubstituenten, vorzugsweise Methyl oder Ethyl, darstellen,
- n eine Zahl größer 1 ist, sodass der Polyetherblock ein Zahlenmittel der Molmasse im Wesentlichen von 150 bis 5000 g/mol aufweist, wobei das Zahlenmittel der Molmasse mittels hochauflösender SEC bestimmt wird.

13. Verfahren nach Anspruch 11 oder 12, **dadurch gekennzeichnet, dass** es eine Hydrolysereaktion nach der Reaktion des Produkts umfasst, das aus der Polymerisation mindestens eines Dienmonomers mit einem funktionellen Polyether resultiert.

14. Kautschukzusammensetzung auf Basis von mindestens einem verstärkenden Füllstoff und einem Dienblockcopolymer, das in den Ansprüchen 1 bis 10 definiert oder nach dem in den Ansprüchen 11 bis 13 beschriebenen Verfahren synthetisiert ist.

15. Reifen, **dadurch gekennzeichnet, dass** er in mindestens einem seiner Bestandteile eine Kautschukzusammensetzung nach Anspruch 14 umfasst.

## Claims

1. Diene block copolymer comprising a linear or branched polyether block comprising, at each end of the block, a branch point to which up to three diene elastomer branches are bonded, **characterized in that**
a - the copolymer has a Mooney viscosity of at least 30 and at most 100,
b- the copolymer comprises
at least 30% by weight, preferably 35%, of branched macromolecules comprising a polyether block to which at least three diene elastomer blocks are bonded,
at most 70% by weight, preferably 65%, of linear macromolecules,
c - the polyether block has a number-average molar mass ranging from 150 to 5000 g/mol, and
d - each of the two branch points consists of a silicon atom.

2. Diene block copolymer according to Claim 1, **characterized in that** the two silicon atoms are each substituted by at most three elastomer branches and by at most three hydroxyl or C₁-C₁₈ alkoxy, C₅-C₁₈ cycloalkoxy or C₆-C₁₈ oxyaryl groups.

3. Diene block copolymer according to Claim 1 or 2, **characterized in that** the copolymer has a Mooney viscosity of at least 40 and at most 80, preferably at most 70.

4. Diene block copolymer according to any one of Claims 1 to 3, **characterized in that** the polyether block is a polyoxymethylene, polyethylene oxide), polypropylene oxide) or polytetrahydrofuran block, preferably the polyether block is a polyethylene oxide) or polypropylene oxide) block.

5. Diene block copolymer according to any one of Claims 1 to 4, **characterized in that** the end of the elastomer branches not bonded to a silicon atom bears a function comprising a nitrogen atom, preferably a cyclic or acyclic amine function, at the end not bonded to a silicon atom.

6. Diene block copolymer according to any one of Claims 1 to 5, **characterized in that**
_ the branched macromolecules correspond to general formula I: 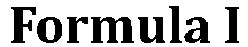 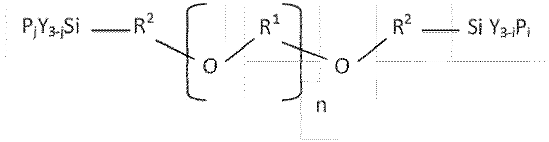 in which,
- R1 represents a linear or branched, C₁-C₁₀ divalent hydrocarbon-based group, in particular a -CH(R')-CH(R")- group, in which R' and R" are, independently of one another, a hydrogen atom or a C₁-C₄ alkyl substituent, preferably R1 is a C₁-C₄ alkanediyl group, more preferentially a ethanediyl or 1,2- or 1,3- propanediyl group,
- the R2 represent, independently of one another, a linear or branched or cyclic, saturated or unsaturated, divalent hydrocarbon-based group, preferably aliphatic group, having 1 to 50 carbon atoms, preferably a linear aliphatic group, which is preferably saturated, preferentially having 1 to 15 carbon atoms, preferably 2 to 10,
- the Y represent, in an identical or different manner, a group of formula - OR4 in which the R4 represent, independently of one another, a hydrogen atom, a C₁-C₁₈ alkyl, C₅-C₁₈ cycloalkoxyl or C₆-C₁₈ aryl substituent, preferably the R4 represent a hydrogen atom or a C₁-C₄ alkyl substituent, preferably methyl or ethyl,
- i and j are numbers which are each, independently of one another, equal to 1, 2 or 3, with the proviso that (i+j) ranges from 3 to 6, and
- P represents a diene elastomer block;
_ and the linear block macromolecules correspond to general formula II: 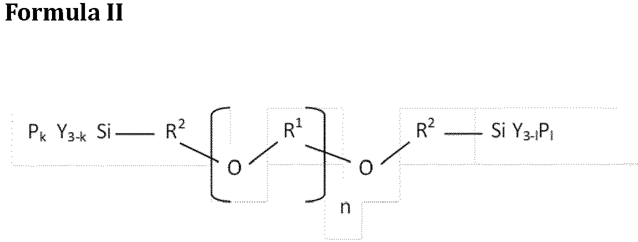 in which,
- R1 represents a linear or branched, C₁-C₁₀ divalent hydrocarbon-based group, in particular a -CH(R')-CH(R")- group, in which R' and R" are, independently of one another, a hydrogen atom or a C₁-C₄ alkyl substituent, preferably R1 is a C₁-C₄ alkanediyl group, more preferentially a ethanediyl or a 1,2- or 1,3- propanediyl group,
- the R2 represent, independently of one another, a linear or branched or cyclic, saturated or unsaturated, divalent hydrocarbon-based group, preferably aliphatic group, having 1 to 50 carbon atoms, preferably a linear aliphatic group, which is preferably saturated, preferentially having 1 to 15 carbon atoms, preferably 2 to 10,
- the Y represent, in an identical or different manner, a group of formula - OR4 in which the R4 represent, independently of one another, a hydrogen atom, a C₁-C₁₈ alkyl, C₅-C₁₈ cycloalkoxyl or C₆-C₁₈ aryl substituent, preferably the R4 represent a hydrogen atom or a C₁-C₄ alkyl substituent, preferably methyl or ethyl,
- k and 1 are numbers which are each, independently of one another, equal to 0 or 1, with the proviso that (k+l) is equal to 1 or 2, and
- P represents a diene elastomer block.

7. Diene block copolymer according to any one of Claims 1 to 6, **characterized in that** the copolymer comprises at least 50% by weight of branched macromolecules consisting of a polyether block to which at least three diene elastomer blocks are bonded.

8. Diene block copolymer according to any one of Claims 1 to 7, **characterized in that** the copolymer comprises at least 20% by weight, preferably at least 35%, of branched macromolecules consisting of a polyether block to which at least three diene elastomer blocks are bonded.

9. Diene block copolymer according to any one of Claims 1 to 8, **characterized in that** the copolymer comprises at most 25% of branched macromolecules consisting of a polyether block to which four or more diene elastomer blocks are bonded.

10. Diene block copolymer according to any one of Claims 1 to 9, **characterized in that**, at each branch point, up to three diene elastomer blocks and up to three -OR groups are bonded, R representing, independently of one another, a C₁-C₄ alkyl substituent or a hydrogen atom, and **in that** at least one of the following characteristics is observed, at least two, at least three, at least four, at least five, at least six, at least seven, and preferably all:
(i) the polyether block is linear consisting of -(OR)- units, in which R is a C₁-C₄ alkanediyl group, more preferentially an ethanediyl or propanediyl group;
(ii) the polyether block has a number-average molar mass of approximately from 150 to 5000 g/mol and preferably from 200 to 3000 g/mol;
(iii) all or a part, preferably at least 50 mol%, of the alkoxy functions substituting one or more silicon atoms are hydrolysed to give hydroxyl groups;
(iv) the diene elastomer is a butadiene-styrene copolymer;
(v) all or a part, preferably at least 70 mol%, of the ends of elastomer branches not bonded to a silicon atom are functionalized, with respect to the number of moles of chain end, by an amine function;
(vi) the mean Mn of the elastomer branches is less than 150 000 g/mol, preferably from 40 000 to 100 000 g/mol;
(vii) the copolymer comprises at least 50% by weight of branched macromolecules with at least three branches;
(viii) the copolymer comprises at least 20% by weight of branched macromolecules with three branches, preferably at least 35%.

11. Process for the synthesis of such a diene block copolymer according to any one of Claims 1 to 10, **characterized in that** it comprises the reaction of the product of the anionic polymerization, in the presence of a polymerization initiator, of at least one diene monomer, with a linear or branched functionalized polyether having a number-average molar mass ranging from 150 to 5000 g/mol comprising, at each end of the main chain, a trifunctional group selected from trialkoxysilyl groups or trihalosilyl groups, with a molar ratio of the functional polyether to the metal of the polymerization initiator of at least 0.1, preferably at least 0.15, more preferentially at least 0.25, and at most 0.45, preferentially at most 0.40, or even at most 0.35.

12. Process according to Claim 11, **characterized in that** the functionalized polyether corresponds to general formula III: 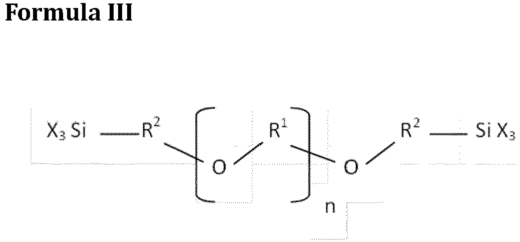 in which:
- R1 represents a linear or branched, C₁-C₁₀ divalent hydrocarbon-based group, in particular a -CH(R')-CH(R")- group, in which R' and R" are, independently of one another, a hydrogen atom or a C₁-C₄ alkyl substituent, preferably R1 is a C₁-C₄ alkanediyl group, more preferentially an ethanediyl or propanediyl group,
- the R2 represent, independently of one another, a linear or branched or cyclic, saturated or unsaturated, divalent hydrocarbon-based group, preferably aliphatic group, having 1 to 50 carbon atoms, preferably a linear aliphatic group, which is preferably saturated, preferentially having 1 to 15 carbon atoms, preferably 2 to 10,
- the X represent a halogen atom, preferably a chlorine atom, or a group of formula -OR3 in which the R3 represent, independently of one another, a C₁-C₁₈ alkyl, C₅-C₁₈ cycloalkoxyl or C₆-C₁₈ aryl substituent, preferably the R3 represent a C₁-C₄ alkyl substituent, preferably methyl or ethyl,
- n is a number greater than 1, so that the polyether block has a number-average molar mass of approximately from 150 to 5000 g/mol.

13. Process according to Claim 11 or 12, **characterized in that** it comprises a hydrolysis reaction at the end of the reaction of the product resulting from the polymerization of at least one diene monomer with the functional polyether.

14. Rubber composition based on at least one reinforcing filler and a diene block copolymer as defined in Claims 1 to 10 or synthesized according to the process described in Claims 11 to 13.

15. Tyre **characterized in that** it comprises, in at least one of its constituent elements, a rubber composition according to Claim 14.
